# EUROPÄISCHE PATENTANMELDUNG

(11) **EP 4 746 242 A2**
(43) Veröffentlichungstag der Anmeldung: **20.05.2026**
(21) Anmeldenummer: 26161019.0
(22) Anmeldetag: 12.12.2023
(51) Int. Cl.: H02J 7/34

(54) **ENERGIESPEICHERSYSTEM**

(62) Teilanmeldung aus: 23215990.5
(71) Anmelder: Pfeiffer Vacuum Technology AG, 35614 Asslar (DE)
(72) Erfinder: Böttcher, Jochen, 35394 Gießen (DE)
(74) Vertreter: Manitz Finsterwald Patent- und Rechtsanwaltspartnerschaft mbB

(57) **Zusammenfassung**

Ein Energiespeichersystem umfasst mehrere Speichermodule und eine Steuereinrichtung. Die Steuereinrichtung ist ausgebildet, Betriebsbedingungen des Energiespeichersystems für einen vorbestimmten Zeitraum zu ermitteln und in Abhängigkeit von den ermittelten Betriebsbedingungen des Energiespeichersystems sowie in Abhängigkeit von mindestens einem jeweiligen internen Parameter der mehreren Speichermodule eines dieser Speichermodule auszuwählen. Ferner ist die Steuereinrichtung ausgebildet, anhand der ermittelten Betriebsbedingungen des Energiespeichersystems und anhand des mindestens einen internen Parameters des ausgewählten Moduls festzulegen, ob das ausgewählte Modul Energie aufnimmt, Energie abgibt oder deaktiviert wird.

## Beschreibung

Die Erfindung betrifft ein Energiespeichersystem mit mehreren Speichermodulen und ein Verfahren zum Betreiben eines solchen Energiespeichersystems.

Bei Energiespeichersystemen kann prinzipiell nur ein Teil der Energie, die dem System zur Speicherung zugeführt wird, anschließend wieder entnommen werden, um beispielsweise eine andere Einrichtung oder ein anderes System mit Energie zu versorgen. Die Selbstentladung von Speichermodulen, wie sie z.B. bei Schwungradspeichern und Batterien generell auftritt, ist ein Beispiel für unvermeidbare Energieverluste, die als interner Energieverbrauch der Energiespeichersysteme angesehen werden können. Ferner ist eine gewisse Energiemenge zur Funktionserhaltung der Energiespeichersysteme erforderlich, und eine Elektronik zur Steuerung und Überwachung des jeweiligen Energiespeichersystems benötigt ebenfalls eine gewisse Energiemenge. Die Funktionserhaltung und die Elektronik der Energiespeichersysteme sind ebenfalls mit einem internen Energieverbrauch verbunden, wenn die erforderliche Energiemenge nicht von außen zugeführt, sondern dem Energiespeichersystem selbst entnommen wird.

Wenn ein Energiespeichersystem beispielsweise Batterien umfasst, kann eine bestimmte Energiemenge zur Heizung oder Kühlung der Batterien erforderlich sein. Wenn ein Energiespeichersystem hingegen einen oder mehrere Schwungradspeicher aufweist, treten unvermeidbare Energieverluste durch mechanische Reibung und Gasreibung auf, die jedoch durch den Betrieb von Schwungrädern im Vakuum und eine Magnetlagerung der Schwungräder verringert werden können. Die Erzeugung des Vakuums und die Magnetlagerung erfordern jedoch wiederum eine gewisse Energiemenge, die beispielsweise dem Schwungradspeicher selbst entnommen wird und in diesem Fall zum internen Energieverbrauch des Energiespeichersystems beiträgt.

Ein Energiespeichersystem kann ferner mehrere Speichermodule umfassen, bei denen sich verschiedene Modultypen durch bestimmte Charakteristika unterscheiden können. Beispielsweise unterscheiden sich Batterien und Schwungradspeicher bezüglich Selbstentladung, Temperaturempfindlichkeit und Ladezyklen. Die Ladeleistung, d.h. die Energiemenge, die dem jeweiligen Speichermodul innerhalb eines bestimmten Zeitraums zugeführt werden kann, ist bei Batterien und Schwungradspeichern sehr stark verschieden. Dies gilt ebenso für die maximale Energiemenge, die einer Batterie bzw. einem Schwungradspeicher in einem bestimmten Zeitraum entnommen werden kann. Ferner eignen sich Schwungradspeicher problemlos für ein Tiefentladung, d.h. für eine Energieentnahme bis zu einem Energieinhalt von nahezu Null, während eine solche Tiefentladung bei Batterien vermieden werden sollte, um deren Lebensdauer zu verlängern.

Ein Energiespeichersystem kann ferner mehrere gleichartige Module umfassen, beispielsweise mehrere Schwungradspeicher oder mehrere Batterien, oder eine Kombination aus verschiedenartigen Modulen, beispielsweise eine oder mehrere Batterien und gleichzeitig einen oder mehrere Schwungradspeicher. Bei solchen Energiespeichersystemen treten die vorstehend beschriebenen Energieverluste und Energiemengen zur Funktionserhaltung für jedes Modul auf, und die Module werden üblicherweise bezüglich des Energiehaushalts unabhängig voneinander behandelt bzw. gesteuert.

Eine Aufgabe der Erfindung besteht darin, ein Energiespeichersystem und ein Verfahren zum Betreiben eines solchen zu schaffen, die eine Minimierung des internen Energieverbrauchs des Energiespeichersystems ermöglichen.

Diese Aufgabe wird durch ein Energiespeichersystem und ein Verfahren mit den Merkmalen der unabhängigen Ansprüche gelöst. Vorteilhafte Weiterbildungen der Erfindung sind in den Unteransprüchen, der Beschreibung und den Zeichnungen angegeben.

Das Energiespeichersystem umfasst mehrere Speichermodule und eine Steuereinrichtung. Die Steuereinrichtung ist ausgebildet, Betriebsbedingungen des Energiespeichersystems für einen vorbestimmten Zeitraum zu ermitteln und in Abhängigkeit von den ermittelten Betriebsbedingungen des Energiespeichersystems sowie in Abhängigkeit von mindestens einem jeweiligen internen Parameter der mehreren Speichermodule eines dieser Speichermodule auszuwählen. Ferner ist die Steuereinrichtung ausgebildet, anhand der ermittelten Betriebsbedingungen des Energiespeichersystems und anhand des mindestens einen internen Parameters des ausgewählten Speichermoduls festzulegen, ob das ausgewählte Speichermodul Energie aufnimmt, Energie abgibt oder deaktiviert wird.

Die Betriebsbedingungen des Energiespeichersystems können beispielsweise einen jeweiligen Zustand umfassen, in welchem dem Energiespeichersystem Energie zugeführt wird oder Energie aus diesem entnommen wird, sowie einen inaktiven Zustand, in welchem dem Energiespeichersystem weder Energie zugeführt wird noch Energie aus diesem entnommen wird. Darüber hinaus können die Betriebsbedingungen spezielle Zustände wie beispielsweise ein Wartungsintervall umfassen. Die Betriebsbedingungen können ferner auch für zukünftige Zeitpunkte innerhalb des vorbestimmten Zeitraums ermittelt werden und umfassen, dass dem Energiespeichersystem ab einem oder mehreren der zukünftigen Zeitpunkte Energie zugeführt oder entnommen werden soll, oder dass das Energiespeichersystem für ein Zeitintervall zwischen zwei zukünftigen Zeitpunkten inaktiv sein soll, d.h. weder Energie aufnehmen noch abgeben soll.

Der vorbestimmte Zeitraum kann einen momentanen Zeitpunkt einschließen und sich beispielsweise von einem zurückliegenden Zeitpunkt, z.B. in der frühen Vergangenheit, bis zu einem zukünftigen Zeitpunkt erstrecken, der beispielsweise in der nahen Zukunft liegt. Alternativ kann der vorbestimmte Zeitraum jedoch auch ausschließlich ein zukünftiges Zeitintervall umfassen. Wenn die Steuereinrichtung die Betriebsbedingungen des Energiespeichersystems für den vorbestimmten Zeitraum angibt, kann es somit einerseits momentane Betriebsbedingungen feststellen und/oder andererseits zukünftige Betriebsbedingungen voraussagen. Die Voraussage solcher zukünftiger Betriebsbedingungen kann beispielsweise umfassen, dass bereits zum momentanen Zeitpunkt bekannt ist, dass eine bestimmte Einrichtung in einem bestimmten zukünftigen Zeitintervall mit Energie aus dem Energiespeichersystem versorgt werden soll oder dass eine andere Einrichtung ab einem zukünftigen Zeitpunkt Energie bereitstellt, die von dem Energiespeichersystem aufgenommen werden kann.

Zusätzlich oder alternativ zur Ermittlung der momentanen oder zukünftigen Betriebsbedingungen des Energiespeichersystems, d.h. zusätzlich zu äußeren Bedingungen, berücksichtigt die Steuereinrichtung mindestens einen jeweiligen internen Parameter der mehreren Speichermodule, um eines dieser Speichermodule auszuwählen. Der interne Parameter kann beispielsweise einen Energieinhalt umfassen, der bei elektrischen Speichermodulen ein Ladezustand des jeweiligen Speichermoduls sein kann. Ferner können mehrere weitere interne Parameter berücksichtigt werden, beispielsweise die Temperatur des jeweiligen Speichermoduls oder auch die Selbstentladung oder die mögliche Ladeleistung eines bestimmten Modultyps.

Ein Vorteil des Energiespeichersystems besteht darin, dass zunächst eines der Speichermodule in Abhängigkeit von den äußeren Bedingungen und in Abhängigkeit von der momentanen internen Beschaffenheit der mehreren Speichermodule mittels der Steuereinrichtung ausgewählt wird, um dieses ausgewählte Speichermodul anschließend an die ermittelten Betriebsbedingungen anzupassen und unter Berücksichtigung des internen Zustands des ausgewählten Speichermoduls bezüglich seines Energiehaushalts zu optimieren. Die Entscheidung, ob das ausgewählte Speichermodul Energie aufnimmt, Energie abgibt oder deaktiviert werden soll, kann in Einklang mit den Betriebsbedingungen beispielsweise derart getroffen werden, dass die Energiemenge minimiert wird, die für eine Funktionserhaltung des ausgewählten Speichermoduls erforderlich ist. Die Steuereinrichtung kann somit eines der Speichermodule derart auswählen und steuern, dass der interne Energieverbrauch dieses Speichermoduls minimiert wird.

Eine solche Optimierung des internen Energieverbrauchs kann jedoch in Wechselwirkung mit den weiteren Speichermodulen des Energiespeichersystems erfolgen. Wenn beispielsweise für den Energieinhalt des ausgewählten Speichermoduls als dessen interner Parameter ermittelt wird, dass dieser unterhalb eines vorbestimmten Schwellenwerts liegt, kann die Steuereinrichtung beispielsweise bewirken, dass das ausgewählte Speichermodul seinen restlichen Energieinhalt an ein oder mehrere andere Speichermodule abgibt, um anschließend deaktiviert zu werden. Wenn umgekehrt die ermittelten Betriebsbedingungen umfassen, dass eine bestimmte Energiemenge von einer anderen Einrichtung bereitgestellt werden kann, um das Energiespeichersystem mit Energie zu versorgen, kann das eine der Speichermodule beispielsweise anhand seines momentanen Energieinhalts und seiner momentanen oder zukünftigen Aufnahmefähigkeit für Energie ausgewählt werden. Anschließend kann dieses Speichermodul die bereitstehende Energiemenge aufnehmen, da es für die Aufnahme dieser Energiemenge momentan oder in der nahen Zukunft am besten geeignet ist.

Die Auswahl eines der mehreren Speichermodule zur Optimierung des Energiehaushalts kann ferner mittels der Steuereinrichtung iterativ durchgeführt werden. Beispielsweise kann zunächst ein Speichermodul zum Abgeben einer angeforderten Energiemenge ausgewählt werden, bis der Energieinhalt dieses Speichermoduls erschöpft ist, um anschließend ein nächstes Speichermodul für die Abgabe der erforderlichen Energie auszuwählen, bis auch dessen Energieinhalt erschöpft ist, usw. Auf eine solche Weise kann eine sequentielle Energieentnahme mit möglicher anschließender Deaktivierung jeweiliger Speichermodule des Energiespeichersystems erfolgen. Dadurch kann die Anzahl momentan oder zukünftig aktiver Speichermodule des Energiespeichersystems minimiert werden, und es kann folglich die gesamte Energiemenge minimiert werden, die für die Funktionserhaltung des Energiespeichersystems notwendig ist.

Insgesamt bewirkt die Auswahl eines der mehreren Speichermodule und die Sonderbehandlung dieses Speichermoduls bezüglich der Aufnahme und Abgabe von Energie sowie bezüglich der Deaktivierung, dass der interne Energieverbrauch des Energiespeichersystems minimiert wird. Dies führt außerdem zu einer Verlängerung der Lebensdauer und zu einer besseren Verfügbarkeit des Energiespeichersystems. Ferner kann die Effizienz der Energieaufnahme und Energieabgabe des gesamten Energiespeichersystems optimiert werden, insbesondere dann, wenn die Auswahl und die Sonderbehandlung jeweils eines der mehreren Speichermodule iterativ erfolgt.

Gemäß einer Ausführungsform kann die Steuereinrichtung ferner ausgebildet sein, anhand der ermittelten Betriebsbedingungen des Energiespeichersystems und anhand des mindestens einen internen Parameters des ausgewählten Speichermoduls festzulegen, ob entweder ein anderes Speichermodul des Energiespeichersystems die von dem ausgewählten Speichermodul abgegebene Energie aufnimmt oder ob das Energiespeichersystem die von dem ausgewählten Modul abgegebene Energie an eine externe Einrichtung abgibt. Anhand von äußeren Kriterien, welche die Betriebsbedingungen des Energiespeichersystems festlegen, und anhand von inneren Kriterien bzw. Charakteristiken des ausgewählten Speichermoduls kann somit entschieden werden, wohin der Energiefluss aus dem ausgewählten Speichermodul erfolgt, wenn zuvor festgelegt wurde, dass das ausgewählte Speichermodul Energie abgibt. Dadurch kann die Effizienz der Energieflüsse innerhalb des Energiespeichersystems sowie bei der Abgabe von Energie an eine externe Einrichtung optimiert werden.

Wenn das ausgewählte Speichermodul beispielsweise als Schwungradspeicher ausgebildet ist und eine externe Einrichtung die Abgabe einer großen Energiemenge aus dem Energiespeichersystem anfordert, kann ein solcher Schwungradspeicher zumindest einen Teil der angeforderten Energiemenge in einem relativ kurzen Zeitraum an die externe Einrichtung abgeben, solange der Energieinhalt des Schwungradspeichers oberhalb eines bestimmten Schwellenwerts liegt. Wenn ein solcher Schwungradspeicher jedoch beispielsweise einen relativ geringen Energieinhalt unterhalb eines bestimmten Schwellenwerts aufweist, kann die Steuereinrichtung stattdessen festlegen, dass der restliche Energieinhalt des Schwungradspeichers auf andere Speichermodule des Energiespeichersystems übertragen wird, beispielsweise auf einen anderen Schwungradspeicher oder auf eine Batterie.

Der mindestens eine interne Parameter der Speichermodule kann einen Energieinhalt des jeweiligen Speichermoduls umfassen. Wenn die Speichermodule des Energiespeichersystems ausgebildet sind, elektrische Energie aufzunehmen und abzugeben, kann der interne Parameter konkret einen Ladezustand des jeweiligen Speichermoduls umfassen. Ferner können mehrere interne Parameter des jeweiligen Speichermoduls berücksichtigt werden, um das ausgewählte Speichermodul zu ermitteln. Die mehreren internen Parameter können beispielsweise einen Ladezustand, eine Charakteristik bezüglich der Selbstentladung und/oder der aufnehmbaren Energiemenge pro Zeit, d.h. eine Ladeleistung, des jeweiligen Speichermoduls umfassen, wenn das Speichermodul zur Aufnahme und Abgabe elektrischer Energie ausgebildet ist.

Ferner kann den ermittelten Betriebsbedingungen eine Energiemenge zugeordnet sein, die dem Energiespeichersystem in dem vorbestimmten Zeitraum zugeführt werden soll oder aus dem Energiespeichersystem entnommen werden soll. Die Betriebsbedingungen des Energiespeichersystems können folglich derart ermittelt werden, dass das Energiespeichersystem durch die Sonderbehandlung des ausgewählten Speichermoduls an Angebot und Nachfrage bezüglich der aufzunehmenden oder zu entnehmenden Energiemenge anpassbar ist. Dadurch kann der Energiehaushalt des Energiespeichersystems insgesamt weiter optimiert werden.

Ferner kann die Energiemenge, die den ermittelten Betriebsbedingungen zugeordnet ist, mit einer zu erwartenden Energieentnahme in Verbindung stehen, beispielsweise durch einen Verbraucher wie etwa ein Elektrofahrzeug, das mittels des Energiespeichersystems geladen werden soll. Die Energiemenge, die mit den Betriebsbedingungen des Energiespeichersystems in Beziehung steht, kann ferner ein zu erwartendes Energieangebot für das Energiespeichersystem umfassen, beispielsweise durch Nachtstrom aus einem Stromnetz, mit dem das Energiespeichersystem verbunden werden kann. Die Steuereinrichtung des Energiespeichersystems kann in diesem Fall zukünftigen Betriebsbedingungen des Energiespeichersystems derart ermitteln bzw. festlegen, dass ein solches Speichermodul des Energiespeichersystems ausgewählt wird, das zur Aufnahme des Energieangebots bzw. konkret des Nachtstroms in der Lage ist.

Gemäß einer weiteren Ausführungsform kann die Steuereinrichtung ferner ausgebildet sein, die Betriebsbedingungen des Energiespeichersystems anhand eines Zustands einer externen Einrichtung anzugeben, welche ausgebildet ist, mit dem Energiespeichersystem zum Übertragen von Energie auf die externe Einrichtung verbunden zu werden. Die Festlegung des ausgewählten Speichermoduls und dessen Sonderbehandlung bzw. spezifische Steuerung können bei dieser Ausführungsform an die Erfordernisse der externen Einrichtung angepasst werden, welche die Betriebsbedingungen des Energiespeichersystems festlegen. Dadurch lässt sich der Energiefluss von dem Energiespeichersystem bzw. aus dem ausgewählten Speichermodul zu der externen Einrichtung optimieren, beispielsweise bezüglich der Energiemenge, die in einem vorbestimmten Zeitraum auf die externe Einrichtung übertragen wird. Die externe Einrichtung kann ein beliebiger Verbraucher oder beispielsweise eine Batterie eines Elektrofahrzeugs sein, die in einem vorbestimmten Zeitraum aufgeladen werden soll.

Gemäß einer weiteren Ausführungsform kann die Steuereinrichtung ferner ausgebildet sein, die Betriebsbedingungen des Energiespeichersystems anhand von Parametern einer externen Einrichtung zu ermitteln, mit welcher das Energiespeichersystem zum Übertragen von Energie auf das Energiespeichersystem verbindbar ist. Die externe Einrichtung kann bei dieser Ausführungsform eine beliebige Energiequelle umfassen, beispielsweise ein Stromnetz, eine Einrichtung zur Energieerzeugung wie etwa eine Fotovoltaikanlage oder ein anderes Energiespeichersystem. Die Parameter der externen Einrichtung können beispielsweise eine Energiemenge, die während eines bestimmten Zeitraums zur Verfügung steht, oder eine elektrische Leistung bei der Energieübertragung umfassen, d.h. die maximal übertragbare Energiemenge pro Zeit. Somit kann bei dieser Ausführungsform die Auswahl eines der Speichermodule und dessen Steuerung bei der Aufnahme einer Energiemenge von der externen Einrichtung an die Eigenschaften dieser externen Einrichtung angepasst werden.

Gemäß einer weiteren Ausführungsform ist die Steuereinrichtung ferner ausgebildet, die mehreren Speichermodule derart zu steuern, dass nur das ausgewählte Speichermodul so lange Energie abgibt, während die weiteren Speichermodule keine Energie abgeben, bis ein Energieinhalt des ausgewählten Speichermoduls einen vorbestimmten Schwellenwert unterschreitet, und das ausgewählte Modul deaktiviert wird, wenn der Energieinhalt unterhalb des vorbestimmten Schwellenwerts liegt.

Wenn die Speichermodule zum Aufnehmen und Abgeben elektrischer Energie ausgebildet sind, kann der Energieinhalt einen Ladezustand des jeweiligen Speichermoduls umfassen. Bei der vorliegenden Ausführungsform wird das ausgewählte Speichermodul sozusagen als erstes bezüglich des Energieinhalts entleert und anschließend deaktiviert, bevor beispielsweise ein weiteres Speichermodul wie vorstehend beschrieben ausgewählt wird, um wiederum als einziges Modul zunächst entleert und anschließend deaktiviert zu werden. Somit kann die Steuerung gemäß der vorliegenden Ausführungsform iterativ ausgeführt werden, so dass ein Speichermodul nach dem anderen sequentiell deaktiviert wird.

Durch die Entleerung und anschließende Deaktivierung jeweils eines einzigen Moduls kann die Anzahl der zu einem bestimmten Zeitpunkt aktiven Speichermodule minimiert werden, so dass der interne Energieverbrauch bzw. Eigenverbrauch der Speichermodule insgesamt minimiert wird. Dies gilt insbesondere für eine sequentielle Entleerung und Deaktivierung mehrerer Speichermodule.

Gemäß einer weiteren Ausführungsform umfassen die Speichermodule mindestens zwei verschiedene Modultypen. Die Speichermodule eines ersten Modultyps können für eine Energieentnahme bis zu einem ersten Rest-Energieinhalt ausgebildet sein, während die Speichermodule eines zweiten Modultyps für eine Energieentnahme bis zu einem zweiten Rest-Energieinhalt ausgebildet sein können. Der erste Rest-Energieinhalt kann kleiner als der zweite Rest-Energieinhalt sein.

Die Speichermodule des ersten Modultyps können beispielsweise für eine sogenannte Tiefentladung geeignet sein, bei welcher der erste Rest-Energieinhalt sehr gering und insbesondere Null ist. Mit anderen Worten können die Speichermodule des ersten Modultyps vorzugsweise vollständig entladen werden. Ein Beispiel für solche Speichermodule sind Schwungradspeicher.

Die Speichermodule des zweiten Modultyps können hingegen solche Energiespeicher sein, bei denen eine Tiefentladung bzw. vollständige Entladung im Betrieb der Speichermodule vermieden werden sollte. Gemäß einem Beispiel umfasst der zweite Modultyp Batterien, bei denen sich eine vollständige Entladung nachteilig auf die Lebensdauer auswirken kann.

Die Speichermodule des ersten Modultyps können ferner einen ersten internen Energieverbrauch aufweisen, während die Speichermodule des zweiten Modultyps einen zweiten internen Energieverbrauch aufweisen können. Der ersten interne Energieverbrauch kann größer als der zweite interne Energieverbrauch sein.

Der jeweilige Energieverbrauch der Speichermodule des ersten bzw. zweiten Modultyps kann unter anderem durch eine Selbstentladung der Speichermodule bedingt sein, die somit für den ersten Modultyp größer als für den zweiten Modultyp sein kann. Beispielsweise ist die Selbstentladung bei Schwungradspeichern erheblich höher als bei Batterien. Ferner kann der Betrieb eines Schwungradspeichers einen zusätzlichen Energieverbrauch erfordern, beispielsweise für die Erzeugung eines Vakuums zum Verringern der Gasreibung und für eine Magnetlagerung zur Verringerung der mechanischen Reibung. Ein zusätzlicher Energieverbrauch für Magnetlagerung und Vakuumerzeugung fällt bei Batterien nicht an.

Der erste Modultyp und der zweite Modultyp können sich ferner durch unterschiedliche Ladungs/Entladungs-Charakteristiken unterscheiden. Beispielsweise können Speichermodule des ersten Modultyps für die Abgabe einer größeren Energiemenge in einer vorbestimmten Zeit, d.h. für eine größere Entladungsleistung, geeignet sein als Speichermodule des zweiten Modultyps. Ebenso können die Speichermodule des ersten Modultyps umgekehrt für eine Aufnahme einer größeren Energiemenge pro Zeiteinheit, d.h. für eine größere Ladeleistung, geeignet sein als die Speichermodule des zweiten Modultyps. Ferner können die Speichermodule des zweiten Modultyps während der Speicherung einen geringeren Energieverlust durch Selbstentladung aufweisen als die Speichermodule des ersten Modultyps.

Wie vorstehend bereits erwähnt, können die Speichermodule des ersten Modultyps als Schwungradspeicher ausgebildet sein, während die Speichermodule des zweiten Modultyps als Batterien ausgebildet sein können. Die Kombination solcher unterschiedlicher Modultypen bei den mehreren Speichermodulen kann den Vorteil aufweisen, dass das Energiespeichersystem während des Betriebs auf optimale Weise an die jeweiligen momentanen oder zukünftigen Betriebsbedingungen des Energiesystems angepasst werden kann. Ferner kann der interne Energieverbrauch des Energiespeichersystems verringert werden, wenn Speichermodule zweier unterschiedlicher Modultypen vorhanden sind.

Wenn die zukünftigen Betriebsbedingungen des Energiespeichersystems beispielsweise umfassen, dass eine große Energiemenge aufgenommen werden kann, die beispielsweise von einer Einrichtung zur Energieerzeugung oder aus einem Stromnetz bereitgestellt wird, kann die Steuereinrichtung des Energiespeichersystems ein oder mehrere Speichermodule des ersten Modultyps, z.B. einen oder mehrere Schwungradspeicher, für die Aufnahme der bereitgestellten Energiemenge auswählen. Dies kann ebenso für Betriebsbedingungen des Energiespeichersystems gelten, bei denen in kurzer Zeit eine große Energiemenge entnommen werden soll. Für solche Betriebsbedingungen können die Speichermodule des ersten Modultyps ausgewählt werden, da diese beispielsweise für eine tiefere Entladung geeignet sein können als die Speichermodule des zweiten Modultyps. Konkret können für eine Entnahme einer großen Energiemenge ein oder mehrere Schwungradspeicher ausgewählt werden, die für eine Tiefentladung bis zu einem Energieinhalt von Null geeignet sind, ohne dass sich dies nachteilig auf die Lebensdauer des jeweiligen Schwungradspeichers auswirkt.

Während des Betriebs des Energiespeichersystems kann die Steuereinrichtung die Speichermodule des ersten Modultyps und des zweiten Modultyps derart steuern, dass in Abhängigkeit von den Betriebsbedingungen des Energiespeichersystems und den jeweiligen internen Parametern der Speichermodule ein Energieinhalt eines oder mehrerer Speichermodule des ersten Modultyps oder des zweiten Modultyps auf ein oder mehrere Speichermodule des jeweiligen anderen Modultyps übertragen wird, um dadurch die Anzahl der aktiven Speichermodule zu minimieren. Beispielsweise kann der Energieinhalt bzw. die Ladung eines Schwungradspeichers, der den ersten Modultyp repräsentiert, auf eine Batterie übertragen werden, die zu dem zweiten Modultyp gehört, sobald der Schwungradspeicher mit einer geringen Drehzahl betrieben wird und dadurch einen geringen Energieinhalt aufweist. Wenn in diesem Fall außerdem anhand der ermittelten Betriebsbedingungen des Energiespeichersystems erkennbar ist, dass dem Energiespeichersystem für einen bestimmten zukünftigen Zeitraum keine große Energiemenge zugeführt oder entnommen werden soll, kann der Schwungradspeicher nach der Übertragung seiner restlichen Energie auf eine Batterie deaktiviert werden.

Die Verwendung der zwei verschiedenen Modultypen der Speichermodule kann daher mittels der Steuereinrichtung an die momentanen und zukünftigen Betriebsbedingungen des Energiespeichersystems angepasst werden, d.h. für einen vorbestimmten Zeitraum im Voraus. Dadurch lässt sich wiederum der interne Energieverbrauch des Energiespeichersystems weiter verringern.

Gemäß einer weiteren Ausführungsform ist mindestens ein Speichermodul als Schwungradspeicher ausgebildet. Das Energiespeichersystem umfasst bei dieser Ausführungsform somit mindestens ein Speichermodul, das für eine Tiefentladung bis zu einem Ladungszustand bzw. Energieinhalt von Null geeignet ist. Dadurch kann das Energiespeichersystem in der Lage sein, in einem kurzen Zeitraum eine große Energiemenge aufzunehmen und wieder abzugeben. Die weiteren Speichermodule des Energiespeichersystems können bei dieser Ausführungsform entweder ebenfalls Schwungradspeicher sein, so dass alle Speichermodule des Energiespeichersystems als Schwungradspeicher ausgebildet sind. Alternativ können die Speichermodule einen oder mehrere Schwungradspeicher und eine oder mehrere Batterien umfassen, wobei diese nicht für eine Tiefentladung geeignet sind, aber dafür den Vorteil einer geringen Selbstentladung und somit eines geringen internen Energieverbrauchs aufweisen.

Der Schwungradspeicher kann ein Magnetlager und ein Vakuumgerät umfassen. Die Steuereinrichtung kann ferner ausgebildet sein, während einer Deaktivierung des Schwungradspeichers das Magnetlager zu deaktivieren und das Vakuumgerät zumindest teilweise abzuschalten. Wenn der Schwungradspeicher folglich aufgrund der momentanen oder zukünftigen Betriebsbedingungen des Energiespeichersystems als dasjenige Speichermodul ausgewählt wird, das seinen Energieinhalt vollständig abgibt und anschließend deaktiviert wird, kann der interne Energieverbrauch des Energiespeichersystems dadurch verringert werden, dass das Magnetlager und das Vakuumgerät des Schwungradspeichers ebenfalls deaktiviert bzw. zumindest teilweise abgeschaltet werden.

Beim Abschalten des Vakuumgeräts können eine oder mehrere Vakuumpumpen, die für eine Evakuierung eines oder mehrerer Schwungradspeicher vorgesehen sind, um deren Gasreibung zu verringern, sukzessive abgeschaltet werden. Dies kann davon abhängen, wie viele Vakuumpumpen dem einen oder mehreren Schwungradspeichern zugeordnet sind. Falls eine Vakuumpumpe beispielsweise mehrere Schwungradspeicher evakuiert, kann die Drehzahl der Vakuumpumpe jeweils dann um einen vorbestimmten Betrag verringert werden, wenn ein jeweiliger Schwungradspeicher deaktiviert wird.

Mindestens ein weiteres Speichermodul, d.h. zusätzlich zu mindestens einem Schwungradspeicher, kann als Batterie ausgebildet sein, und die Steuereinrichtung kann ferner ausgebildet sein, die Speichermodule derart zu steuern, dass ein Energieinhalt des Schwungradspeichers von diesem auf die Batterie übertragen wird, sobald der Energieinhalt des Schwungradspeichers unterhalb eines vorbestimmten Schwellenwerts liegt. Die Steuereinrichtung kann den Schwungradspeicher anschließend deaktivieren.

Beispielsweise kann es bei einer geringen Drehzahl des Schwungradspeichers für den gesamten internen Energieverbrauch des Energiespeichersystems vorteilhaft sein, den Schwungradspeicher vollständig zu entleeren bzw. zu entladen, indem dessen Energieinhalt auf eine Batterie übertragen wird. Die Steuereinrichtung kann beispielsweise erkennen, dass in absehbarer Zeit keine große Energiemenge aus dem Energiespeichersystem entnommen werden soll, und dessen Betriebsbedingungen entsprechend ermitteln. In diesem Fall kann der Schwungradspeicher nach dessen Entladung deaktiviert werden, um den internen Energieverbrauch des Energiespeichersystems insgesamt zu minimieren.

Gemäß einer weiteren Ausführungsform ist die Steuereinrichtung ferner ausgebildet, einen ersten Zeitpunkt zu ermitteln, ab dem das Energiespeichersystem eine erste Energiemenge aufnehmen soll, und einen zweiten Zeitpunkt zu ermitteln, ab dem das Energiespeichersystem eine zweite Energiemenge abgeben soll. Ferner kann die Steuereinrichtung anhand einer Zeitdifferenz zwischen dem ersten Zeitpunkt und dem zweiten Zeitpunkt, anhand der ersten Energiemenge sowie anhand der zweiten Energiemenge festlegen, ob der Schwungradspeicher oder die Batterie die erste Energiemenge aufnimmt, um anschließend in der Lage zu sein, die zweite Energiemenge abzugeben. Die Betriebsbedingungen des Energiespeichersystems, der von der Steuereinrichtung ermittelt bzw. angegeben werden, hängen bei dieser Ausführungsform somit nicht nur von den Energiemengen ab, die ab dem ersten bzw. zweiten Zeitpunkt aufgenommen bzw. abgegeben werden sollen, sondern auch von dem Zeitraum bzw. der Zeitdifferenz zwischen diesen beiden Zeitpunkten. Somit können die Betriebsbedingungen des Energiespeichersystems bei dieser Ausführungsform momentane Betriebsbedingungen zu dem ersten Zeitpunkt und zukünftige Betriebsbedingungen zu dem zweiten Zeitpunkt sowie optional zu weiteren zukünftigen Zeitpunkten umfassen.

Wenn beispielsweise die erste Energiemenge relativ groß ist und oberhalb eines vorbestimmten Schwellenwerts liegt, und ferner die zweite Energiemenge in einem ähnlichen Bereich liegt sowie zusätzlich die Zeitdifferenz zwischen dem ersten und zweiten Zeitpunkt relativ gering ist, d.h. beispielsweise kürzer als ein vorbestimmtes Zeitintervall, kann die erste Energiemenge von dem Schwungradspeicher aufgenommen werden, um die zweite Energiemenge innerhalb eines relativ kurzen Zeitraums wieder abgeben zu können. Voraussetzung dafür ist natürlich, dass der gesamte Energieinhalt des Schwungradspeichers einschließlich der ersten Energiemenge größer als die zweite Energiemenge ist. Bei diesem Szenario kann es weniger relevant sein, dass der Schwungradspeicher einen höheren internen Energieverbrauch aufweist als die Batterie. Stattdessen kann es aufgrund der ermittelten Betriebsbedingungen des Energiespeichersystems, d.h. aufgrund der relativ großen zweiten Energiemenge, die in naher Zukunft abgegeben werden soll, relevanter sein, dass der Schwungradspeicher die zweite Energiemenge in einem relativ kurzen Zeitraum bereitstellen kann.

Wenn umgekehrt innerhalb eines relativ großen zukünftigen Zeitraums, beispielsweise über Nacht, kein hoher oder gar kein Energiebedarf zu erwarten ist, der als zweite Energiemenge dem Energiespeichersystem zu entnehmen ist, aber gleichzeitig eine bestimmte erste Energiemenge für eine Speicherung in dem Energiespeichersystem zur Verfügung steht, kann die Steuereinrichtung aufgrund solcher Betriebsbedingungen die Batterie als dasjenige Speichermodul auswählen, dem die erste Energiemenge zugeführt wird. Bei diesem Szenario spielt der interne Energieverbrauch der Speichermodule des Energiespeichersystems eine größere Rolle, da die erste Energiemenge nach deren Speicherung länger vorgehalten werden muss.

Bei beiden vorstehend beschriebenen Szenarien kann somit der Energiehaushalt des Energiespeichersystems optimiert und an die ermittelten Betriebsbedingungen angepasst werden, indem das geeignetste Speichermodul ausgewählt wird.

Weiterer Gegenstand der Erfindung ist ein Verfahren zum Betreiben eines Energiespeichersystems, das mehrere Speichermodule und eine Steuereinrichtung umfasst. Gemäß dem Verfahren werden zunächst Betriebsbedingungen des Energiespeichersystems ermittelt, die einem vorbestimmten Zeitraum zugeordnet sind. In Abhängigkeit von den ermittelten Betriebsbedingungen des Energiespeichersystems und in Abhängigkeit von mindestens einem jeweiligen internen Parameter der mehreren Speichermodule wird anschließend eines der mehreren Speichermodule ausgewählt, und anhand der ermittelten Betriebsbedingungen des Energiespeichersystems und anhand des mindestens einen internen Parameters des ausgewählten Speichermoduls wird mittels der Steuereinrichtung festgelegt, ob das ausgewählte Modul Energie aufnimmt, Energie abgibt oder deaktiviert wird.

Für das Verfahren gelten die vorstehenden Ausführungen zu dem Energiespeichersystem entsprechend, dies gilt insbesondere hinsichtlich Vorteilen und bevorzugten Ausführungsformen. Weiterhin versteht es sich, dass sämtliche hierin genannten Merkmale miteinander kombinierbar sind, sofern nicht explizit etwas Gegenteiliges angegeben ist.

Die vorliegende Offenbarung umfasst unter anderem die folgenden Gegenstände und Ausführungsformen:
1. Energiespeichersystem (101, 501), umfassend:
   mehrere Speichermodule (110) und
   eine Steuereinrichtung (121), die ausgebildet ist:
      Betriebsbedingungen des Energiespeichersystems (101, 501) für einen vorbestimmten Zeitraum zu ermitteln,
      eines der mehreren Speichermodule (110) in Abhängigkeit von den ermittelten Betriebsbedingungen des Energiespeichersystems (101, 501) und in Abhängigkeit von mindestens einem jeweiligen internen Parameter der mehreren Speichermodule (110) auszuwählen und
      anhand der ermittelten Betriebsbedingungen des Energiespeichersystems (101, 501) und anhand des mindestens einen internen Parameters des ausgewählten Speichermoduls (110) festzulegen, ob das ausgewählte Speichermodul (110) Energie aufnimmt, Energie abgibt oder deaktiviert wird.
2. Energiespeichersystem (101, 501) nach Ausführungsform 1, wobei die Steuereinrichtung (121) ferner ausgebildet ist, anhand der ermittelten Betriebsbedingungen des Energiespeichersystems (101, 501) und anhand des mindestens einen internen Parameters des ausgewählten Speichermoduls (110) festzulegen, ob:
   ein anderes Speichermodul (110) des Energiespeichersystems (101, 501) eine von dem ausgewählten Speichermodul (110) abgegebene Energiemenge aufnimmt oder
   das Energiespeichersystem (101, 501) eine von dem ausgewählten Speichermodul (110) abgegebene Energiemenge an eine externe Einrichtung abgibt.
3. Energiespeichersystem (101, 501) nach Ausführungsform 1 oder 2, wobei der mindestens eine interne Parameter der Speichermodule (110) einen Energieinhalt des jeweiligen Speichermoduls (110) umfasst.
4. Energiespeichersystem (101, 501) nach einer der Ausführungsformen 1 bis 3, wobei
   den ermittelten Betriebsbedingungen eine Energiemenge zugeordnet ist,
   die dem Energiespeichersystem (101, 501) in dem vorbestimmten Zeitraum zugeführt werden soll oder aus dem Energiespeichersystem (101, 501) entnommen werden soll.
5. Energiespeichersystem (101, 501) nach einer der Ausführungsformen 1 bis 4, wobei
   die Steuereinrichtung (121) ferner ausgebildet ist, die Betriebsbedingungen des Energiespeichersystems (101, 501) anhand eines Zustands einer externen Einreichung zu ermitteln, welche ausgebildet ist, mit dem Energiespeichersystem (101, 501) zum Übertragen von Energie auf die externe Einrichtung verbunden zu werden.
6. Energiespeichersystem (101, 501) nach einer der Ausführungsformen 1 bis 5, wobei
   die Steuereinrichtung (121) ferner ausgebildet ist, die Betriebsbedingungen des Energiespeichersystems (101, 501) anhand von Parametern einer externen Einrichtung zu ermitteln, mit welcher das Energiespeichersystem (101, 501) zum Übertragen von Energie auf das Energiespeichersystem (101, 501) verbindbar ist.
7. Energiespeichersystem (101, 501) nach einer der Ausführungsformen 1 bis 6, wobei
   die Steuereinrichtung (121) ferner ausgebildet ist, die mehreren Speichermodule (110) derart zu steuern, dass:
   nur das ausgewählte Speichermodul (110) solange Energie abgibt, während die weiteren Speichermodule (110) keine Energie abgeben, bis ein Energieinhalt (130) des ausgewählten Speichermoduls (110) einen vorbestimmten Schwellenwert unterschreitet, und
   das ausgewählte Speichermodul (110) deaktiviert wird, wenn der Energieinhalt (130) unterhalb des vorbestimmten Schwellenwerts liegt.
8. Energiespeichersystem (101, 501) nach einer der Ausführungsformen 1 bis 7, wobei
   die Speichermodule (110) mindestens zwei verschiedene Modultypen (115, 515) umfassen,
   die Speichermodule (110) eines ersten Modultyps (115) für eine Energieentnahme bis zu einem ersten Rest-Energieinhalt ausgebildet sind,
   die Speichermodule (110) eines zweiten Modultyps (515) für eine Energieentnahme bis zu einem zweiten Rest-Energieinhalt ausgebildet sind und
   der erste Rest-Energieinhalt kleiner als der zweite Rest-Energieinhalt ist.
9. Energiespeichersystem (101, 501) nach Ausführungsform 8, wobei
   die Speichermodule (110) des ersten Modultyps (115) einen ersten internen Energieverbrauch aufweisen,
   die Speichermodule (110) eines zweiten Modultyps (515) einen zweiten internen Energieverbrauch aufweisen und
   der erste interne Energieverbrauch größer als der zweite interne Energieverbrauch ist.
10. Energiespeichersystem (101, 501) nach Ausführungsform 7 oder 8, wobei
   die Speichermodule (110) des ersten Modultyps als Schwungradspeicher (115) ausgebildet sind und
   die Speichermodule (110) des zweiten Modultyps als Batterien (515) ausgebildet sind.
11. Energiespeichersystem (101, 501) nach einer der Ausführungsformen 1 bis 10, wobei
   mindestens ein Speichermodul (110) als Schwungradspeicher (115) ausgebildet ist.
12. Energiespeichersystem (101, 501) nach Ausführungsform 11, wobei
   der Schwungradspeicher (115) ein Magnetlager und ein Vakuumgerät (300, 400) umfasst,
   die Steuereinrichtung (121) ferner ausgebildet ist, während einer Deaktivierung des Schwungradspeichers (115) das Magnetlager zu deaktivieren und das Vakuumgerät (300, 400) zumindest teilweise abzuschalten.
13. Energiespeichersystem (101, 501) nach Ausführungsform 11 oder 12, wobei
   mindestens ein weiteres Speichermodul (110) als Batterie (515) ausgebildet ist und
   die Steuereinrichtung (121) ferner ausgebildet ist:
      die Speichermodule (110) derart zu steuern, dass ein Energieinhalt (130) des Schwungradspeichers (115) von diesem auf die Batterie (515) übertragen wird, sobald der Energieinhalt (130) des Schwungradspeichers (115) unterhalb eines vorbestimmten Schwellenwerts liegt, und
      den Schwungradspeicher (115) anschließend zu deaktivieren.
14. Energiespeichersystem (101, 501) nach einer der Ausführungsform 1 bis 13, wobei
   die Steuereinrichtung (121) ferner ausgebildet ist:
   einen ersten Zeitpunkt zu ermitteln, ab dem das Energiespeichersystem (101, 501) eine erste Energiemenge aufnehmen soll,
   einen zweiten Zeitpunkt zu ermitteln, ab dem das Energiespeichersystem (101, 501) eine zweite Energiemenge abgeben soll, und
   anhand einer Zeitdifferenz zwischen dem ersten Zeitpunkt und dem zweiten Zeitpunkt, anhand der ersten Energiemenge und anhand der zweiten Energiemenge festzulegen, ob der Schwungradspeicher (115) oder die Batterie (515) die erste Energiemenge aufnimmt, um anschließend in der Lage zu sein, die zweite Energiemenge abzugeben.
15. Verfahren zum Betreiben eines Energiespeichersystems (101, 501), das mehrere Speichermodule (110) und eine Steuereinrichtung (121) umfasst, wobei das Verfahren umfasst, dass:
   Betriebsbedingungen des Energiespeichersystems (101, 501) für einen vorbestimmten Zeitraum ermittelt werden,
   eines der mehreren Speichermodule (110) in Abhängigkeit von den ermittelten Betriebsbedingungen des Energiespeichersystems (101, 501) und in Abhängigkeit von mindestens einem jeweiligen internen Parameter der mehreren Speichermodule (110) ausgewählt wird und
   anhand der ermittelten Betriebsbedingungen des Energiespeichersystems (101, 501) und anhand des mindestens einen internen Parameters des ausgewählten Speichermoduls (110) festgelegt wird, ob das ausgewählte Speichermodul (110) Energie aufnimmt, Energie abgibt oder deaktiviert wird.

Nachfolgend wird die Erfindung beispielhaft anhand vorteilhafter Ausführungsformen unter Bezugnahme auf die beigefügten Figuren beschrieben. Es zeigen, jeweils schematisch:
- Fig. 1: ein Energiespeichersystem mit Schwungradspeichern und dessen Betriebsweise gemäß dem Stand der Technik,
- Fig. 2: ein erfindungsgemäßes Energiespeichersystem mit Schwungradspeichern und dessen Betriebsweise,
- Fig. 3 und 4: Vakuumsysteme für das Energiespeichersystem von Fig. 2 und Betriebsweisen der Vakuumsysteme, und
- Fig. 5 und 6: eine weitere Ausführungsform eines erfindungsgemäßen Energiespeichersystems mit Schwungradspeichern und Batterien sowie verschiedene Betriebsweisen für dieses.

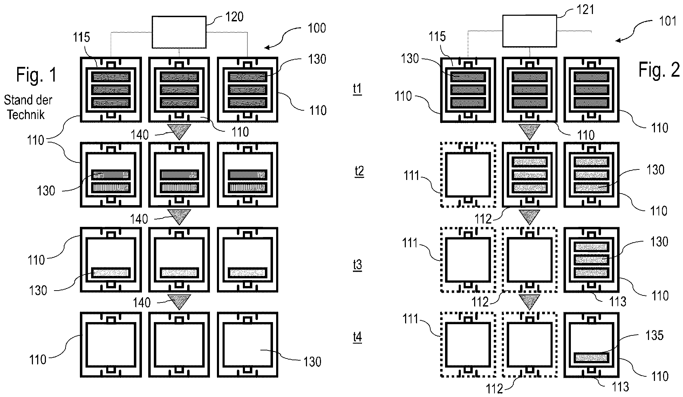

Fig. 1 zeigt schematisch ein Energiespeichersystem 100 gemäß dem Stand der Technik und dessen Betriebsweise, d.h. ein Verfahren zum Betreiben des Energiespeichersystems 100. Das Energiespeichersystem 100 umfasst mehrere Speichermodule 110, die bei der vorliegenden Ausführungsform jeweils als Schwungradspeicher 115 ausgebildet sind, und eine Steuereinrichtung 120, die signaltechnisch und kommunikativ mit den Speichermodulen 110 des Energiespeichersystems 100 verbunden ist. Die Speichermodule 110 sind ferner zur Aufnahme, Speicherung und Entnahme elektrischer Energie vorgesehen.

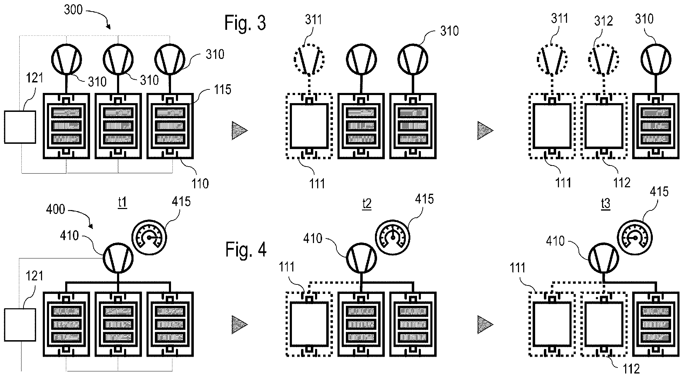

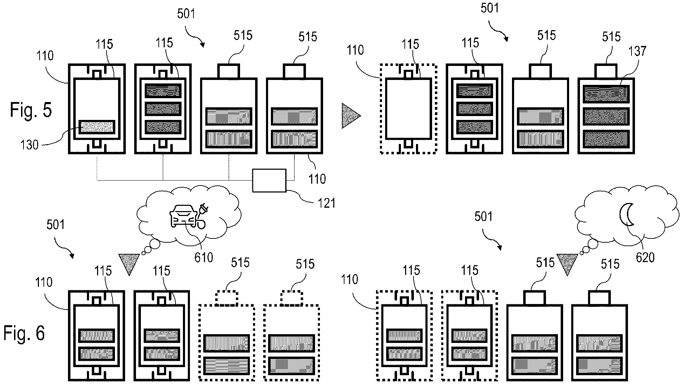

Die Steuereinrichtung 120 steuert die Zufuhr und Entnahme von Energie zu bzw. aus den Speichermodulen 110 sowie interne Parameter der Speichermodule 110 wie z.B. Parameter einer Magnetlagerung und eines Vakuumsystems der Schwungradspeicher 115 (vgl. Fig. 3 und 4) bzw. Parameter einer Heizung bzw. Kühlung von Batterien 515 (vgl. Fig. 5), wenn zumindest ein Teil der Speichermodule 110 als Batterie ausgebildet ist. Ein Energieinhalt 130 der jeweiligen Speichermodule 110, d.h. der Schwungradspeicher 115 (vgl. Fig. 1) und/oder der Batterien 515 (vgl. zusätzlich Fig. 5), ist durch Balken in den jeweiligen Modulen 110 veranschaulicht.

Fig. 1 zeigt ferner eine zeitliche Abfolge während des Betriebs des Energiespeichersystems 100 für eine Phase, in der dem Energiespeichersystem 100 Energie entnommen und an eine nicht dargestellte externe Einrichtung abgegeben wird. Konkret ist der jeweilige Energieinhalt 130 für die Speichermodule 110 des Energiespeichersystems 100 für vier verschiedene Zeitpunkte t1, t2, t3 und t4 dargestellt. Der Übersichtlichkeit halber ist die Steuereinrichtung 120 nur für den ersten Zeitpunkt t1 gezeigt. Die Speichermodule 110 sind jedoch stets mit der Steuereinrichtung 120 verbunden, d.h. auch zu den nachfolgenden Zeitpunkten t2, t3 und t4.

Zum Zeitpunkt t1 sind alle Speichermodule 110 bzw. Schwungradspeicher 115 des Energiespeichersystems 100 vollständig geladen, was durch jeweils drei Balken für den Energieinhalt 130 des jeweiligen Speichermoduls 110 dargestellt ist. Bei der Entnahme von Energie aus dem Energiespeichersystem 100 für die externe Einrichtung steuert die Steuereinrichtung 120 die mehreren Speichermodule 110 gemäß dem Stand der Technik derart, dass jedem der Speichermodule 110 gleichzeitig Energie entnommen wird. Diese gleichmäßige Entnahme von Energie aus allen Speichermodulen 110 bzw. Schwungradspeichern 115 ist jeweils durch den Energieinhalt 130 mit zwei Balken für den Zeitpunkt t2 und durch den Energieinhalt 130 mit einem Balken für dem Zeitpunkt t3 dargestellt. Ferner veranschaulichen Blockpfeile 140 den Übergang von jeweils einem der Zeitpunkte t1, t2 und t3 zum jeweils nächsten Zeitpunkt t2, t3 und t4. Wie man anhand der zeitlichen Abfolge des jeweiligen Energieinhalts 130 der Speichermodule 110 erkennen kann, wird den Speichermodulen 110 parallel und gleichmäßig Energie entnommen, bis die Speichermodule 110 zum Zeitpunkt t4 einen Energieinhalt 130 von nahezu Null aufweisen.

Ein Nachteil der Betriebsweise des Energiespeichersystems 100 gemäß dem Stand der Technik besteht darin, dass sämtliche Speichermodule 110 während der Energieentnahme aus dem Energiespeichersystem 100 in Betrieb sind und daher jeweils einen internen Energieverbrauch aufweisen. Der interne Energieverbrauch der als Schwungradspeicher 115 ausgebildeten Speichermodule 110 ist einerseits durch die Magnetlagerung und die Vakuumerzeugung der jeweiligen Schwungradspeicher 115 bedingt (vgl. auch Fig. 3), durch welche die mechanische Reibung und die Gasreibung zwischen den Komponenten des jeweiligen Schwungradspeichers 115 verringert werden, und andererseits durch den Betrieb einer Elektronik zum Steuern und Überwachen der Speichermodule 110, welche die Steuereinrichtung 120 umfasst.

In Fig. 2 ist ein erfindungsgemäßes Energiespeichersystem 101 und ein entsprechendes Verfahren für dessen Betrieb schematisch dargestellt. Das Energiespeichersystem 101 umfasst ebenfalls mehrere Speichermodule 110, die jeweils als Schwungradspeicher 115 ausgebildet sind, und eine Steuereinrichtung 121, welche die Speichermodule 110 jedoch auf andere Weise steuert als die Steuereinrichtung 120 gemäß dem Stand der Technik. Der Übersichtlichkeit halber ist die Steuereinrichtung 121 wiederum nur für den ersten Zeitpunkt t1 gezeigt. Die Speichermodule 110 sind jedoch stets mit der Steuereinrichtung 121 verbunden, d.h. auch zu den nachfolgenden Zeitpunkten t2, t3 und t4.

In Fig. 2 ist der jeweilige Energieinhalt 130 der Speichermodule 110 auf die gleiche Weise für die vier verschiedenen Zeitpunkte t1, t2, t3 und t4 durch Balken dargestellt wie in Fig. 1. Während der Phase zwischen dem Zeitpunkt t1 und t4 wird dem Energiespeichersystem 101 ebenfalls Energie für eine nicht dargestellte externe Einrichtung entnommen, d.h. in ähnlicher Weise, wie dies für das Energiespeichersystem 100 gemäß dem Stand der Technik vorstehend beschrieben ist. Zum Zeitpunkt t1 ermittelt die Steuereinrichtung 121 jedoch Betriebsbedingungen des Energiespeichersystems 101, die im vorliegenden Fall umfassen, dass Energie für die externe Einrichtung aus dem Energiespeichersystem 101 entnommen werden soll. Außerdem ermittelt die Steuereinrichtung 121 interne Parameter der jeweiligen Speichermodule 110, beispielsweise deren Energieinhalt bzw. Ladezustand 130.

Zum Zeitpunkt t1 wählt die Steuereinrichtung 121 eines der Speichermodule 110 bzw. einen der Schwungradspeicher 115 aus, beispielsweise ein erstes Speichermodul 111, um zunächst nur diesem ausgewählten Speichermodul 111 Energie zu entnehmen. Zum Zeitpunkt t2 ist das erste Speichermodul 111 nahezu vollständig entladen bzw. entleert, so dass dessen Energieinhalt 130 nahezu Null ist. Daher wählt die Steuereinrichtung 121 zum Zeitpunkt t2 ein zweites Speichermodul 112 zur Entnahme von Energie für die externe Einrichtung aus. Gleichzeitig wird das erste Speichermodul 111 deaktiviert, so dass dessen interner Energieverbrauch zur Vakuumerzeugung und Magnetlagerung entfällt. Die Deaktivierung des ersten Speichermoduls 111 sowie später des zweiten Speichermoduls 112 ist durch eine Darstellung der Außenkontur dieses Speichermoduls mit gepunkteten Linien veranschaulicht.

Zum Zeitpunkt t3 ist wiederum auch das zweite Speichermodul 112 vollständig entladen bzw. entleert, so dass das zweite Speichermodul 112 zum Zeitpunkt t3 ebenfalls deaktiviert wird. Gleichzeitig wird ein drittes Speichermodul 113 zum Zeitpunkt t3 aktiviert, so dass ab dem Zeitpunkt t3 nur dem dritten Speichermodul 113 Energie entnommen wird.

Zum Zeitpunkt t4 weist das dritte Speichermodul 113 zwar einen geringeren Energieinhalt auf als zu dem Zeitpunkt t3. Da jedoch das erste und das zweite Speichermodul 111, 112 zuvor deaktiviert worden sind und deren interner Energieverbrauch zur Magnetlagerung und Vakuumerzeugung bereits für einen gewissen Zeitraum weggefallen ist, ist in dem dritten Energiespeichermodul 113 zum Zeitpunkt t4 noch ein gewisser Rest-Energieinhalt 135 vorhanden, d.h. im Gegensatz zu den Speichermodulen 110 des Energiespeichersystems 100 gemäß dem Stand der Technik.

Das erfindungsgemäße Energiespeichersystem 101 unterscheidet sich folglich von dem Energiespeichersystem 100 gemäß dem Stand der Technik durch eine sequentielle Deaktivierung der Speichermodule 110 während einer Phase zwischen den Zeitpunkten t1 bis t4, in der den Energiespeichersystemen 100 und 101 Energie entnommen wird. Die sequentielle Deaktivierung der Speichermodule 110 wird dadurch erreicht, dass nacheinander jeweils eines der Speichermodule 110 ausgewählt wird, um zunächst nur diesem ausgewählten Speichermodul 111, 112, 113 usw. Energie zu entnehmen und dieses vollständig zu entladen sowie anschließend zu deaktivieren.

Durch die sequentielle Deaktivierung der Speichermodule 110 des Energiespeichersystems 101 wird somit der interne Energieverbrauch des Energiespeichersystems 101 verringert. Da die Speichermodule 110 des erfindungsgemäßen Energiespeichersystems 101 während dessen Betrieb häufiger vollständig deaktiviert werden als bei dem Energiespeichersystem 100 gemäß dem Stand der Technik, lassen sich ferner Wartungsarbeiten an den jeweiligen Speichermodulen 110, die eine vollständige Deaktivierung des jeweiligen Speichermoduls 110 erfordern, leichter planen. Mit anderen Worten ergeben sich aufgrund der sequentiellen Deaktivierung häufiger Gelegenheiten zur Wartung der jeweiligen Speichermodule 110 des erfindungsgemäßen Energiespeichersystems 101, während das Energiespeichersystem 101 gleichzeitig für den Betrieb verfügbar bleibt.

Die vorstehend beschriebene sequentielle Deaktivierung von Speichermodulen 110 kann auch bei Energiespeichersystemen angewendet werden, die anstelle von Schwungradspeichern 115 Batterien verwenden, wie beispielsweise im Energiespeichersystem 501, das in Fig. 5 und 6 dargestellt ist und neben den Schwungradspeichern 115 die Batterien 515 umfasst. Die Batterien 515 können ebenfalls sequentiell bis zu einem gewissen Ladezustand entladen werden, um sequentiell eine Batterie 515 nach der anderen aus dem Energiespeichersystem 501 auszukoppeln und dabei deren Heizung oder Kühlung zu verringern oder ganz abzuschalten. Dadurch wird wiederum der interne Energieverbrauch des jeweiligen Speichermoduls 110 und somit des Energiespeichersystems 501 insgesamt zu verringert.

In Fig. 3 und 4 ist das erfindungsgemäße Energiespeichersystem 101 jeweils mit einem Vakuumsystem 300 bzw. 400 dargestellt, das jeweils zur Erzeugung des Vakuums in den Schwungradspeichern 115 des Energiespeichersystems 101 vorgesehen ist. Das Vakuumsystem 300 von Fig. 3 umfasst mehrere Vakuumpumpen 310, von denen jeweils eine einem Schwungradspeicher 115 zugeordnet ist. Die Vakuumpumpen 310 sind ebenso wie die Speichermodule 110 bzw. Schwungradspeicher 115 für deren Steuerung mit der Steuereinrichtung 121 signaltechnisch bzw. kommunikativ verbunden. Dies gilt wiederum für alle in Fig. 3 und 4 dargestellten Zeitpunkte t1, t2 und t3, auch wenn die Steuereinrichtung 121 nur für den ersten Zeitpunkt t1 explizit dargestellt ist.

Zum Zeitpunkt t1 sind zunächst alle Speichermodule 110 bzw. Schwungradspeicher 115 des Energiespeichersystems 101 aktiviert, so dass alle Vakuumpumpen 310 des Vakuumsystems 300 in Betrieb sind. Wie vorstehend erläutert, wird zum Zeitpunkt t2 das erste Speichermodul 111 deaktiviert, da das erste Speichermodul 111 zu diesem Zeitpunkt vollständig entladen bzw. entleert ist. Die Deaktivierung des ersten Speichermoduls 111 umfasst, dass auch diejenige Vakuumpumpe 311 deaktiviert wird, die dem ersten Speichermodul 111 zugeordnet ist.

Da zum Zeitpunkt t3 das zweite Speichermodul 112 zusätzlich deaktiviert wird, wird zu diesem Zeitpunkt auch diejenige Vakuumpumpe 312 deaktiviert, die dem zweiten Speichermodul 112 zugeordnet ist. Insgesamt wird somit das Vakuumsystem 300 durch eine Aktivierung oder Deaktivierung der Vakuumpumpen 311, 312 adaptiv an den jeweiligen Zustand der Speichermodule 110 angepasst, indem die jeweilige Vakuumpumpe 310, die einem der Speichermodule 110 zugeordnet ist, zusammen mit dem jeweiligen Speichermodul 110 deaktiviert und bei Bedarf wieder aktiviert wird.

Das in Fig. 4 dargestellte Vakuumsystem 400 für die Schwungradspeicher 115 des erfindungsgemäßen Energiespeichersystems 101 unterscheidet sich von dem Vakuumsystem 300 von Fig. 3 dadurch, dass nur eine Vakuumpumpe 410 allen Speichermodulen 110 des Energiespeichersystems 101 zugeordnet ist. Zum Zeitpunkt t1 wird die Vakuumpumpe 410 mit voller Leistung bzw. bei hoher Drehzahl betrieben, da sämtliche Speichermodule 310 des Energiespeichersystems 101 aktiv sind. Die hohe Drehzahl der Vakuumpumpe 410 ist durch die Anzeige eines entsprechenden Drehzahlmessers 415 veranschaulicht.

Wenn das erste Speichermodul 111 zu dem Zeitpunkt t2 deaktiviert wird, wird jedoch die Drehzahl der Vakuumpumpe 410 entsprechend verringert, da nur noch in den verbleibenden Speichermodulen 110 ein Vakuum erzeugt zu werden braucht, aber nicht mehr in dem deaktivierten ersten Speichermodul 111. Wenn zu dem Zeitpunkt t3 auch das zweite Speichermodul 112 deaktiviert wird, wird die Drehzahl der Vakuumpumpe 410 entsprechend weiter verringert, wie dies wiederum durch die Anzeige des Drehzahlmessers 415 veranschaulicht ist. Zum Zeitpunkt t3 ist nämlich keine Vakuumerzeugung in dem ersten und dem zweiten Speichermodul 111, 112 erforderlich.

Durch die adaptive Anpassung der Vakuumsysteme 300, 400 an die Zahl der aktiven Speichermodule 110 des Energiespeichersystems 101 wird insgesamt der interne Energieverbrauch des Energiespeichersystems 101 verringert, da entweder die Anzahl der aktiven Vakuumpumpen 310 der Anzahl der aktiven Speichermodule 110 entspricht (vgl. Fig. 3) oder die Drehzahl der Vakuumpumpe 410 der an die Anzahl der aktiven Speichermodule 110 angepasst wird.

In Fig. 5 und 6 ist als alternative Ausführungsform ein Energiespeichersystem 501 mit mehreren Speichermodulen 110 schematisch dargestellt. Die Speichermodule 110 sind jeweils entweder als Schwungradspeicher 115 oder als Batterie 515 ausgebildet. Die Speichermodule 110 umfassen somit bei dieser Ausführungsform zumindest zwei Modultypen. Die Speichermodule 110 sind wiederum jeweils mit der Steuereinrichtung 121 des Energiespeichersystems 501 verbunden.

Fig. 5 stellt ein Szenario bzw. Betriebsbedingungen des Energiespeichersystems 501 dar, bei dem bzw. denen einer der Schwungradspeicher 115 einen relativ geringen Energieinhalt 130 aufweist. Sobald dieser Energieinhalt 130 des Schwungradspeichers 115 kleiner als ein vorbestimmter Schwellenwert ist, bewirkt die Steuereinrichtung 121, dass dieser Schwungradspeicher 115 vollständig entladen bzw. entleert wird und der restliche Energieinhalt 130 auf eine der beiden Batterien 515 übertragen wird, wie dies auf der rechten Seite von Fig. 5 dargestellt ist. Die Steuereinrichtung 121 beobachtet bzw. misst somit den Energieinhalt 130 der jeweiligen Speichermodule 110 als einen der internen Parameter der Speichermodule 110, um in Abhängigkeit von einem solchen internen Parameter den Energiehaushalt des Energiespeichersystems 501 zu steuern und zu optimieren. Außerdem ist die Steuereinrichtung 121 wiederum auch für das auf der rechten Seite von Fig. 5 gezeigte Szenario mit den Speichermodulen 110 verbunden, obwohl dies nicht explizit dargestellt ist.

Wie auf der rechten Seite von Fig. 5 zu erkennen ist, wird das Speichermodul 110 mit dem Schwungradspeicher 115 dann, wenn dessen Energieinhalt nahezu Null ist, vollständig deaktiviert, wie dies durch die gepunktete Linie veranschaulicht ist. Im Vergleich zu dem Zustand auf der linken Seite von Fig. 5 weist eine der Batterien 515 in dem Zustand auf der rechten Seite einen höheren Energieinhalt 137 auf. Da einer der Schwungradspeicher 115 in dem Zustand auf der rechten Seite von Fig. 5 deaktiviert ist, entfällt dessen interner Energieverbrauch. Somit wird der gesamte interne Energieverbrauch des Energiespeichersystems 501 durch eine Übertragung des restlichen Energieinhalts 130 von einem der Schwungradspeicher 115 auf eine der Batterien 515 verringert.

Eine solche Optimierung bzw. Verringerung des internen Energieverbrauchs des Energiespeichersystems 501 lässt sich im vorliegenden Szenario dadurch erreichen, dass zwei verschiedene Modultypen der Speichermodule 110 in dem Energiespeichersystem 501 vorhanden sind. Die Schwungradspeicher 115 als erster Modultyp sind problemlos für eine sogenannte Tiefentladung geeignet, d.h. sie können problemlos vollständig entladen bzw. entleert werden, ohne dass dies nachteilige Wirkungen auf die Lebensdauer des Schwungradspeichers 115 hat.

Daher steuert die Steuereinrichtung 121 die Speichermodule 110 des Energiespeichersystems 501 derart, dass die Schwungradspeicher 115 nicht in einem ungünstigen Zustand mit geringem Energieinhalt 130 betrieben werden, da die Schwungradspeicher 115 im Vergleich zu den Batterien 515 einen höheren internen Energieverbrauch aufweisen. Ein geringer Energieinhalt 130 der Schwungradspeicher 115 wird folglich möglichst auf eine oder mehrere Batterien 515 übertragen, die einen geringeren internen Energieverbrauch aufweisen, aber für eine Entladung bis zum einer Energieinhalt von nahezu Null bzw. für eine Tiefentladung weniger geeignet sind als die Schwungradspeicher 115, da sich Tiefentladungen negativ auf die Lebensdauer der Batterien 515 auswirken können.

Fig. 6 zeigt zwei weitere Szenarien bzw. Betriebsbedingungen des Energiespeichersystems 501, das mehrere Schwungradspeicher 115 und mehrere Batterien 515 umfasst. Die Steuereinrichtung 121 des Energiespeichersystems 501 ist jeweils auch für die in Fig. 6 gezeigten Szenarien mit den Speichermodulen 110 verbunden, obwohl dies nicht explizit dargestellt ist.

Bei dem Szenario auf der linken Seite von Fig. 6 ermittelt die Steuereinrichtung 121 zunächst, dass ab einem bestimmten ersten Zeitpunkt eine erste, relativ große Energiemenge, die von einer externen Einrichtung bereitgestellt wird, in das Energiespeichersystem 501 aufgenommen werden kann. Mit anderen Worten besteht momentan, d.h. ab dem ersten Zeitpunkt, ein Angebot zur Aufnahme günstiger Energie durch das Energiespeichersystem 501, wobei diese erste Energiemenge bzw. günstige Energie beispielsweise durch eine Photovoltaikanlage oder durch ein entsprechendes Angebot im Stromnetz bereitgestellt wird.

Ferner ermittelt die Steuereinrichtung 121, dass in naher Zukunft, d.h. beispielsweise ab einem zukünftigen zweiten Zeitpunkt kurz nach dem ersten Zeitpunkt, eine hohe Nachfrage bestehen wird, bei der mit großer Wahrscheinlichkeit eine relativ große Energiemenge aus dem Energiespeichersystem 501 entnommen werden soll. Eine solche Nachfrage in naher Zukunft kann beispielsweise dadurch gegeben sein, dass ein Elektrofahrzeug 610 ab einem bekannten Zeitpunkt aufgeladen werden soll, wie dies in Fig. 6 angedeutet ist. Aufgrund einer relativ geringen Zeitdifferenz zwischen dem ersten Zeitpunkt, ab dem das Energieangebot zur Verfügung steht, und dem zweiten Zeitpunkt, ab dem voraussichtlich eine große Nachfrage bezüglich der Energieentnahme aus dem Energiespeichersystem 501 besteht, legt die Steuereinrichtung 121 fest, dass die Speichermodule 110 mit Schwungradspeichern 115 für die Aufnahme und anschließende Entnahme der Energiemenge verwendet werden.

Eine minimale Zeitdifferenz zwischen dem ersten und zweiten Zeitpunkt, ab welcher die Speichermodule 110 mit Schwungradspeichern 115 und nicht diejenigen mit den Batterien 515 verwendet werden, kann aufgrund von Erfahrungswerten vorab festgelegt werden. Diese Zeitdifferenz als Grenzwert für die Verwendung der Schwungradspeicher 115 kann ferner im Hinblick auf die internen Parameter der beiden Modultypen des Energiespeichersystems 501 bestimmt werden, beispielsweise im Hinblick auf die Selbstentladung und den internen Energieverbrauch der einzelnen Energiespeichermodule 110 mit Schwungradspeicher 115 bzw. mit Batterie 515.

In dem Szenario, das auf der linken Seite von Fig. 6 dargestellt ist und bei dem ein hoher Energiebedarf zum Laden des Elektrofahrzeugs 610 bei vorhergehendem günstigen Energieangebot vorhanden ist, ist der höhere interne Energieverbrauch der Schwungradspeicher 115 aufgrund des relativ kurzen Zeitintervalls zwischen Energieaufnahme und Energieabgabe weniger relevant, da gleichzeitig ein Lade- und Entladezyklus der Speichermodule 110 mit Batterie 515 vermieden wird.

Durch die Verwendung von Schwungradspeichern 115 bei kurzen Zeitdifferenzen zwischen der Aufnahme und der Abgabe von relativ großen Energiemengen werden die Batterien 515 des Energiespeichersystems 501 somit geschont, wodurch deren Lebensdauer verlängert werden kann. Die Speichermodule 110 mit Batterie 515 sind in dem Szenario auf der linken Seite von Fig. 6 folglich deaktiviert, wie dies durch die gepunktete Kontur dieser Module veranschaulicht ist.

Bei dem auf der rechten Seite von Fig. 6 dargestellten weiteren Szenario ermittelt die Steuereinrichtung 121 jedoch im Gegensatz zu dem auf der linken Seite von Fig. 6 dargestellten Szenario, dass zwar ein gewisses Energieangebot beispielsweise durch eine Photovoltaikanlage oder durch Nachtstrom im Netz vorliegt, wie dies beispielhaft durch das Symbol 620 für Nachtstrom dargestellt ist, und dass aber andererseits für einen längeren Zeitraum wenig oder keine Energie aus dem Energiespeichersystem 501 entnommen werden soll.

Bei einem solchen Szenario bzw. bei solchen Betriebsbedingungen des Energiespeichersystems 501, wie sie auf der rechten Seite von Fig. 6 dargestellt sind, legt die Steuereinrichtung 121 folglich fest, dass diejenigen Speichermodule 110 zur Aufnahme von Energie verwendet werden, die jeweils eine Batterie 515 umfassen. Mit den Speichermodulen 110, die eine Batterie 515 umfassen, kann eine gewisse Energiemenge über einen längeren Zeitraum aufgenommen und anschließend gespeichert werden, ohne dass sich der interne Energieverbrauch der Speichermodule 110 mit Batterie 515 negativ auf den gesamten Energiehaushalt des Energiespeichersystems 501 auswirkt, wie dies bei einer längerfristigen Speicherung von Energie in den Schwungradspeichern 115 der Fall wäre.

Die Speichermodule 110 mit Schwungradspeicher 115 bleiben daher während der Aufnahme von Energie durch die Speichermodule 110 mit Batterie 515 deaktiviert, wie dies wiederum durch die gepunkteten Linien angedeutet ist. Dadurch wird der gesamte interne Energieverbrauch des Energiespeichersystems 501 minimiert.

Die Steuereinrichtung 121 des Energiespeichersystems 101, 501 kann verschiedene Algorithmen, künstliche Intelligenz, Datenbanken sowie Kombinationen von diesen verwenden, um Energieflüsse zwischen den Speichermodulen 110 des Energiespeichersystems 101, 501 sowie die Energieflüsse zur Aufnahme in dem Energiespeichersystem 101, 501 und zur Entnahme aus diesem zum momentanen Zeitpunkt und für einen zukünftigen Zeitraum geeignet zu steuern. Dadurch kann insgesamt der interne Energieverbrauch des Energiespeichersystems 101, 501 minimiert und die Verfügbarkeit des Energiespeichersystems 101, 501 verbessert werden.

Ferner kann durch eine geeignete Steuerung mittels der Steuereinrichtung 121 die Lebensdauer des Energiespeichersystems 101, 501 insgesamt verlängert werden, da beispielsweise durch eine Optimierung des internen Energiehaushalts die Häufigkeit von Vorgängen wie beispielsweise Lade- und Entladezyklen von Batterien 515 vermieden werden können, die sich negativ auf die Lebensdauer bestimmter Speichermodule 110 des Energiespeichersystems 101, 501 auswirken können. Zusätzlich zur Überwachung und Voraussage von internen Parametern der jeweiligen Speichermodule 110, die gegebenenfalls mehrere Modultypen umfassen können, kann die Steuereinrichtung 121 zusätzlich Angebot und Nachfrage bezüglich Energiemengen, die von dem Energiespeichersystem 101, 501 aufgenommen bzw. aus diesem entnommen werden sollen, auch für einen zukünftigen Zeitraum ermitteln und die Speichermodule 110 entsprechend steuern, wie dies anhand der verschiedenen Beispiele von Fig. 5 und 6 vorstehend beschrieben ist.

Ferner kann die Steuereinrichtung 121 des Energiespeichersystems 101, 501 auch externe Energiespeicher und deren Verfügbarkeit in bestimmten zukünftigen Zeiträumen ermitteln, um solche externen Einrichtungen wie beispielsweise Batterien von Elektrofahrzeugen als temporäre Speicher in den Energiehaushalt des Energiespeichersystems 101, 501 mit einzubeziehen. Zur Ermittlung der momentanen Betriebsbedingungen und möglicher zukünftiger Betriebsbedingungen des Energiespeichersystems 101, 501 kann die Steuereinrichtung 121 mit verschiedenen externen Einrichtungen in einer kommunikativen Verbindung stehen, so dass solche externen Einrichtungen Informationen bezüglich der Parameter externer Einrichtungen, die eine Entnahme von Energie aus dem Energiespeichersystem 101, 501 anfordern oder die Zufuhr von Energie zu diesem bereitstellen können, und bezüglich des zukünftigen Energieangebots bzw. der zukünftigen Energienachfrage an die Steuereinrichtung 121 übertragen.

### Bezugszeichenliste

- 100: Energiespeichersystem gemäß dem Stand der Technik
- 101: erfindungsgemäßes Energiespeichersystem
- 110: Speichermodul
- 111: erstes ausgewähltes Speichermodul
- 112: zweites ausgewähltes Speichermodul
- 113: drittes ausgewähltes Speichermodul
- 115: Schwungradspeicher
- 120: Steuereinrichtung gemäß dem Stand der Technik
- 121: erfindungsgemäße Steuereinrichtung
- 130: Energieinhalt des jeweiligen Speichermoduls
- 135: restlicher Energieinhalt
- 137: erhöhter Energieinhalt
- 140: Blockpfeil
- 300: Vakuumsystem
- 310: Vakuumpumpe
- 311, 312: deaktivierte Vakuumpumpe
- 400: Vakuumsystem
- 410: Vakuumpumpe
- 415: Drehzahlmesser
- 501: erfindungsgemäßes Energiespeichersystem
- 515: Batterie
- 610: Elektrofahrzeug
- 620: Symbol für Nachtstrom

## Patentansprüche

1. Energiespeichersystem (501), umfassend:
mehrere Speichermodule (110) und
eine Steuereinrichtung (121), die ausgebildet ist:
Betriebsbedingungen des Energiespeichersystems (501) für einen vorbestimmten Zeitraum zu ermitteln,
eines der mehreren Speichermodule (110) in Abhängigkeit von den ermittelten Betriebsbedingungen des Energiespeichersystems (501) und in Abhängigkeit von mindestens einem jeweiligen internen Parameter der mehreren Speichermodule (110) auszuwählen und
anhand der ermittelten Betriebsbedingungen des Energiespeichersystems (501) und anhand des mindestens einen internen Parameters des ausgewählten Speichermoduls (110) festzulegen, ob das ausgewählte Speichermodul (110) Energie aufnimmt, Energie abgibt oder deaktiviert wird,
wobei mindestens ein Speichermodul (110) als Schwungradspeicher (115) ausgebildet ist und mindestens ein weiteres Speichermodul (110) als Batterie (515) ausgebildet ist,
wobei die Steuereinrichtung (121) ferner ausgebildet ist:
einen ersten Zeitpunkt zu ermitteln, ab dem das Energiespeichersystem (501) eine erste Energiemenge aufnehmen soll,
einen zweiten Zeitpunkt zu ermitteln, ab dem das Energiespeichersystem (501) eine zweite Energiemenge abgeben soll, und
anhand einer Zeitdifferenz zwischen dem ersten Zeitpunkt und dem zweiten Zeitpunkt, anhand der ersten Energiemenge und anhand der zweiten Energiemenge festzulegen, ob der Schwungradspeicher (115) oder die Batterie (515) die erste Energiemenge aufnimmt, um anschließend in der Lage zu sein, die zweite Energiemenge abzugeben,
wobei die erste Energiemenge von dem Schwungradspeicher (115) aufgenommen wird, wenn die erste und die zweite Energiemenge oberhalb eines vorbestimmten Schwellenwerts liegen und die Zeitdifferenz zwischen dem ersten und zweiten Zeitpunkt kürzer als ein vorbestimmtes Zeitintervall ist.

2. Energiespeichersystem (501) nach Anspruch 1, wobei die Steuereinrichtung (121) ferner ausgebildet ist, anhand der ermittelten Betriebsbedingungen des Energiespeichersystems (501) und anhand des mindestens einen internen Parameters des ausgewählten Speichermoduls (110) festzulegen, ob:
ein anderes Speichermodul (110) des Energiespeichersystems (501) eine von dem ausgewählten Speichermodul (110) abgegebene Energiemenge aufnimmt oder
das Energiespeichersystem (501) eine von dem ausgewählten Speichermodul (110) abgegebene Energiemenge an eine externe Einrichtung abgibt.

3. Energiespeichersystem (501) nach Anspruch 1 oder 2, wobei der mindestens eine interne Parameter der Speichermodule (110) einen Energieinhalt des jeweiligen Speichermoduls (110) umfasst.

4. Energiespeichersystem (501) nach einem der Ansprüche 1 bis 3, wobei den ermittelten Betriebsbedingungen eine Energiemenge zugeordnet ist, die dem Energiespeichersystem (501) in dem vorbestimmten Zeitraum zugeführt werden soll oder aus dem Energiespeichersystem (501) entnommen werden soll.

5. Energiespeichersystem (501) nach einem der Ansprüche 1 bis 4, wobei die Steuereinrichtung (121) ferner ausgebildet ist, die Betriebsbedingungen des Energiespeichersystems (501) anhand eines Zustands einer externen Einrichtung zu ermitteln, welche ausgebildet ist, mit dem Energiespeichersystem (501) zum Übertragen von Energie auf die externe Einrichtung verbunden zu werden.

6. Energiespeichersystem (501) nach einem der Ansprüche 1 bis 5, wobei die Steuereinrichtung (121) ferner ausgebildet ist, die Betriebsbedingungen des Energiespeichersystems (501) anhand von Parametern einer externen Einrichtung zu ermitteln, mit welcher das Energiespeichersystem (501) zum Übertragen von Energie auf das Energiespeichersystem (501) verbindbar ist.

7. Energiespeichersystem (501) nach einem der Ansprüche 1 bis 6, wobei die Steuereinrichtung (121) ferner ausgebildet ist, die mehreren Speichermodule (110) derart zu steuern, dass:
nur das ausgewählte Speichermodul (110) solange Energie abgibt, während die weiteren Speichermodule (110) keine Energie abgeben, bis ein Energieinhalt (130) des ausgewählten Speichermoduls (110) einen vorbestimmten Schwellenwert unterschreitet, und
das ausgewählte Speichermodul (110) deaktiviert wird, wenn der Energieinhalt (130) unterhalb des vorbestimmten Schwellenwerts liegt.

8. Energiespeichersystem (501) nach einem der Ansprüche 1 bis 7, wobei
die Speichermodule (110) mindestens zwei verschiedene Modultypen (115, 515) umfassen,
die Speichermodule (110) eines ersten Modultyps (115) für eine Energieentnahme bis zu einem ersten Rest-Energieinhalt ausgebildet sind,
die Speichermodule (110) eines zweiten Modultyps (515) für eine Energieentnahme bis zu einem zweiten Rest-Energieinhalt ausgebildet sind und
der erste Rest-Energieinhalt kleiner als der zweite Rest-Energieinhalt ist.

9. Energiespeichersystem (501) nach Anspruch 8, wobei
die Speichermodule (110) des ersten Modultyps (115) einen ersten internen Energieverbrauch aufweisen,
die Speichermodule (110) eines zweiten Modultyps (515) einen zweiten internen Energieverbrauch aufweisen und
der erste interne Energieverbrauch größer als der zweite interne Energieverbrauch ist.

10. Energiespeichersystem (501) nach Anspruch 7 oder 8, wobei
die Speichermodule (110) des ersten Modultyps als Schwungradspeicher (115) ausgebildet sind und
die Speichermodule (110) des zweiten Modultyps als Batterien (515) ausgebildet sind.

11. Energiespeichersystem (501) nach einem der Ansprüche 1 bis 10, wobei
der Schwungradspeicher (115) ein Magnetlager und ein Vakuumgerät (300, 400) umfasst,
die Steuereinrichtung (121) ferner ausgebildet ist, während einer Deaktivierung des Schwungradspeichers (115) das Magnetlager zu deaktivieren und das Vakuumgerät (300, 400) zumindest teilweise abzuschalten.

12. Energiespeichersystem (501) nach einem der Ansprüche 1 bis 11, wobei
die Steuereinrichtung (121) ferner ausgebildet ist:
die Speichermodule (110) derart zu steuern, dass ein Energieinhalt (130) des Schwungradspeichers (115) von diesem auf die Batterie (515) übertragen wird, sobald der Energieinhalt (130) des Schwungradspeichers (115) unterhalb eines vorbestimmten Schwellenwerts liegt, und
den Schwungradspeicher (115) anschließend zu deaktivieren.

13. Verfahren zum Betreiben eines Energiespeichersystems (501), das mehrere Speichermodule (110) und eine Steuereinrichtung (121) umfasst, wobei das Verfahren umfasst, dass:
Betriebsbedingungen des Energiespeichersystems (501) für einen vorbestimmten Zeitraum ermittelt werden,
eines der mehreren Speichermodule (110) in Abhängigkeit von den ermittelten Betriebsbedingungen des Energiespeichersystems (501) und in Abhängigkeit von mindestens einem jeweiligen internen Parameter der mehreren Speichermodule (110) ausgewählt wird und
anhand der ermittelten Betriebsbedingungen des Energiespeichersystems (501) und anhand des mindestens einen internen Parameters des ausgewählten Speichermoduls (110) festgelegt wird, ob das ausgewählte Speichermodul (110) Energie aufnimmt, Energie abgibt oder deaktiviert wird,
wobei mindestens ein Speichermodul (110) als Schwungradspeicher (115) ausgebildet ist und mindestens ein weiteres Speichermodul (110) als Batterie (515) ausgebildet ist,
wobei das Verfahren ferner umfasst, dass
ein erster Zeitpunkt ermittelt wird, ab dem das Energiespeichersystem (501) eine erste Energiemenge aufnehmen soll,
ein zweiter Zeitpunkt ermittelt wird, ab dem das Energiespeichersystem (501) eine zweite Energiemenge abgeben soll, und
anhand einer Zeitdifferenz zwischen dem ersten Zeitpunkt und dem zweiten Zeitpunkt, anhand der ersten Energiemenge und anhand der zweiten Energiemenge festgelegt wird, ob der Schwungradspeicher (115) oder die Batterie (515) die erste Energiemenge aufnimmt, um anschließend in der Lage zu sein, die zweite Energiemenge abzugeben,
wobei die erste Energiemenge von dem Schwungradspeicher (115) aufgenommen wird, wenn die erste und die zweite Energiemenge oberhalb eines vorbestimmten Schwellenwerts liegen und die Zeitdifferenz zwischen dem ersten und zweiten Zeitpunkt kürzer als ein vorbestimmtes Zeitintervall ist.
